(19)

Europäisches
Patentamt
European
Patent Office
Office européen
des brevets

(11)  **EP 4 654 720 A1**

(12)  **EUROPEAN PATENT APPLICATION**
published in accordance with Art. 153(4) EPC

(43) Date of publication:
  **26.11.2025  Bulletin 2025/48**

(21) Application number: **24777787.3**

(22) Date of filing: **19.03.2024**

(51) International Patent Classification (IPC):
  **H04W 72/231** *(2023.01)*    **H04W 72/21** *(2023.01)*

(52) Cooperative Patent Classification (CPC):
  **H04W 72/21; H04W 72/231; H04W 72/232**

(86) International application number:
  **PCT/CN2024/082355**

(87) International publication number:
  **WO 2024/198998 (03.10.2024 Gazette 2024/40)**

(84) Designated Contracting States:
  **AL AT BE BG CH CY CZ DE DK EE ES FI FR GB
  GR HR HU IE IS IT LI LT LU LV MC ME MK MT NL
  NO PL PT RO RS SE SI SK SM TR**
  Designated Extension States:
  **BA**
  Designated Validation States:
  **GE KH MA MD TN**

(30) Priority:  **31.03.2023  CN 202310363641**

(71) Applicant: **Huawei Technologies Co., Ltd.
  Shenzhen, Guangdong 518129 (CN)**

(72) Inventors:
  • **PANG, Xu
    Shenzhen, Guangdong 518129 (CN)**
  • **XU, Rui
    Shenzhen, Guangdong 518129 (CN)**
  • **MI, Xiang
    Shenzhen, Guangdong 518129 (CN)**
  • **QIN, Yi
    Shenzhen, Guangdong 518129 (CN)**

(74) Representative: **Gill Jennings & Every LLP
  The Broadgate Tower
  20 Primrose Street
  London EC2A 2ES (GB)**

(54)  **RESOURCE INDICATION METHOD AND COMMUNICATION APPARATUS**

(57)    A resource indication method and a communication apparatus are provided. The method includes: A network device sends first information, where the first information indicates to report a used or an unused resource in a configured grant CG resource in a CG period; a terminal device obtains the first information, and sends second information based on the first information, where the second information indicates the used or unused resource in the CG resource; and the network device obtains the second information, to obtain the used or unused resource in the CG resource. According to the method in this application, the network device indicates the terminal device to report the used or unused resource, and determines the used or unused resource based on information reported by the terminal device. This facilitates the subsequent rescheduling of unused resources by the network device to other terminal devices for use, to reduce the likelihood of resource waste.

700

| Terminal device | | Network device |

S701: First information, where the first information indicates to report a used or an unused resource in a CG resource in a CG period

S702: Second information, where the second information indicates the used or unused resource in the CG resource

FIG. 7

## Description

This application claims priority to Chinese Patent Application No. 202310363641.2, filed with the China National Intellectual Property Administration on March 31, 2023 and entitled "RESOURCE INDICATION METHOD AND COMMUNICATION APPARATUS", which is incorporated herein by reference in its entirety.

## TECHNICAL FIELD

This application relates to the communication field, and in particular, to a resource indication method and a communication apparatus.

## BACKGROUND

Configured grant (configured grant, CG) refers to a mechanism in an uplink transmission process where uplink scheduling resources required by a terminal device are allocated just once by a network device via radio resource control (radio resource control, RRC) signaling or downlink control information (downlink control information, DCI), allowing the terminal device to periodically reuse the same time-frequency resources for uplink transmission.

However, it has been observed that uplink data sent by the terminal device to the network device uses only a portion of resources, resulting in a waste of resource.

## SUMMARY

This application provides a resource indication method and a communication apparatus, to help reduce the likelihood of resource waste.

According to a first aspect, a resource indication method is provided. The method may be performed by a terminal device, or may be performed by a module (for example, a processor, a chip, or a chip system) used in a terminal device, or may be implemented by a logical node, a logical module, or software that can implement all or some functions of a terminal device. The method includes: obtaining first information, where the first information indicates to report a used or an unused resource in a configured grant CG resource in a CG period; and sending second information based on the first information, where the second information indicates the used or unused resource in the CG resource.

Obtaining the first information may also be described as receiving the first information. The CG period may be understood as a CG cycle. The CG resource may be understood as a resource, for example, a physical uplink shared channel (physical uplink shared channel, PUSCH) resource, a CG PUSCH, or a CG transmission occasion, that is configured by a network device for the terminal device by using CG. The first information may indicate to report the used resource in the CG resource in the CG period, or may indicate to report the unused resource in the CG resource in the CG period.

The first information may be sent by the network device. If uplink data sent by the terminal device in the CG period does not fully use the CG resource, the terminal device may report the used or unused resource to the network device based on the first information.

The second information may indicate the used resource in the CG resource, or may indicate the unused resource in the CG resource. It may be understood that if the first information indicates to report the used resource in the CG resource in the CG period, the second information indicates the used resource in the CG resource. If the first information indicates to report the unused resource in the CG resource in the CG period, the second information indicates the unused resource in the CG resource.

According to the resource indication method provided in this application, the terminal device reports the used or unused resource to the network device based on the first information. This helps distinguish whether the terminal device is capable of indicating the used or unused resource, to ensure service reliability. In addition, the unused resource may be rescheduled by the network device to another terminal device for use, to reduce the likelihood of resource waste.

With reference to the first aspect, in some implementations of the first aspect, the method is applied to the terminal device, and the method further includes: sending third information, where the third information indicates that the terminal device is capable of reporting the used or unused resource in the CG resource.

After the terminal device establishes a connection state to the network device, the terminal device may send the third information to the network device, to inform the network device that the terminal device is capable of reporting the used or unused resource in the CG resource, so that the network device determines, based on requirements, whether to indicate the terminal device to use the capability.

If the terminal device does not have the capability of reporting the used or unused resource in the CG resource, the terminal device may send the third information to the network device, where the third information indicates that the terminal device does not have the capability of reporting the used or unused resource in the CG resource. After obtaining the third information, the network device may determine that the terminal device does not have the capability of reporting the used or unused resource in the CG resource, and subsequently may not indicate the terminal device to report the used or unused resource in the CG resource.

According to the resource indication method provided in this application, the terminal device informs, by using the third information, the network device that the terminal device is capable of reporting the used or unused resource in the CG resource. This helps prevent a reduction in service reliability due to a decoding error caused when the network device indicates the terminal device to report the used or unused resource in the CG resource, the terminal device does not have the reporting capability, and the network device mistakenly considers that the terminal device is capable of reporting the used or unused resource in the CG resource.

With reference to the first aspect, in some implementations of the first aspect, the CG resource is located in a licensed frequency band.

That the CG resource is located in the licensed frequency band is configured by the network device for the terminal device.

The terminal device sends the second information to the network device in the licensed frequency band, where the second information indicates the used or unused resource in the CG resource. In an example, the second information may be transmitted by using uplink control information (uplink control information, UCI). However, the UCI does not include configured grant-uplink control information (configured grant-uplink control information, CG-UCI) in the licensed frequency band, and therefore does not coexist with the CG-UCI. The UCI may be different from UCI specified in an existing protocol, and is newly added UCI indicating the used or unused resource in the CG resource.

According to the resource indication method provided in this application, the CG resource is located in the licensed frequency band, and the terminal device reports the used or unused resource in the CG resource to the network device based on the first information. This helps distinguish whether the terminal device is capable of indicating the used or unused resource, to ensure the service reliability.

With reference to the first aspect, in some implementations of the first aspect, the second information further indicates at least one of the following: a hybrid automatic repeat request (hybrid automatic repeat request, HARQ) process number, a redundancy version, or new data transmission or data retransmission.

The terminal device sends the second information to the network device in the licensed frequency band. In addition to indicating the used or unused resource in the CG resource, the second information may further indicate at least one of the HARQ process number, the redundancy version, or new data transmission or data retransmission.

If the second information is transmitted by using the UCI, in addition to indicating the used or unused resource in the CG resource, the UCI may further indicate at least one of the HARQ process number, the redundancy version, or new data transmission or data retransmission.

According to the resource indication method provided in this application, the second information further indicates at least one of the HARQ process number, the redundancy version, or new data transmission or data retransmission, where one piece of information may indicate a plurality of pieces of information, to help reduce instructions for sending information.

With reference to the first aspect, in some implementations of the first aspect, the method further includes: multiplexing, into the second information based on the first information, at least one piece of the following information: HARQ process number information, redundancy version information, or new data transmission or data retransmission information.

"Multiplexing" means replacement in this application. To be specific, the terminal device may replace at least one piece of the following information: the HARQ process number information, the redundancy version information, or the new data transmission or data retransmission information with the second information based on the first information. The second information may be transmitted by using the UCI. The terminal device may replace at least one piece of the following information: the HARQ process number information, the redundancy version information, or the new data transmission or data retransmission information that is included in the UCI with the second information based on the first information. In addition, in the method in this application, the terminal device uses the CG-UCI for the licensed frequency band based on the first information, and uses one or more original fields of the CG-UCI to indicate the used or unused resource.

The resource indication method provided in this application allows for indicating the reporting of the used or unused resource without the need for additional bits, thereby facilitating bit conservation.

With reference to the first aspect, in some implementations of the first aspect, the method further includes: obtaining fourth information, where the fourth information and the first information indicate that the CG resource is located in an unlicensed frequency band or a licensed frequency band.

If the terminal device obtains the first information but does not obtain the fourth information, the terminal device may determine that the CG resource is located in the licensed frequency band. If the terminal device obtains the first information and obtains the fourth information, the terminal device may determine that the CG resource is located in the unlicensed frequency band. The terminal device may report the used or unused resource, namely, the second information, to the network device in the licensed frequency band or the unlicensed frequency band.

According to the resource indication method provided in this application, the CG resource is located in the licensed frequency band or the unlicensed frequency band, and the terminal device reports the used or unused resource in the CG resource to the network device based on the first information. This helps distinguish whether the terminal device is capable of indicating the used or unused resource, to ensure the service reliability.

With reference to the first aspect, in some implementations of the first aspect, the second information further indicates at least one of the following: a HARQ process number, a redundancy version, new data transmission or data retransmission, or a channel occupancy time.

In the unlicensed frequency band, to be specific, the fourth information indicates that the CG resource is located in the licensed frequency band, the terminal device sends the second information to the network device. In addition to indicating the used or unused resource in the CG resource, the second information may further indicate at least one of the HARQ process number, the redundancy version, new data transmission or data retransmission, or the channel occupancy time.

If the second information is transmitted by using the UCI, in addition to indicating the used or unused resource in the CG resource, the UCI may further indicate at least one of the HARQ process number, the redundancy version, new data transmission or data retransmission, or the channel occupancy time. The UCI is different from UCI in an existing protocol, and is newly added UCI. Compared with the UCI in the existing protocol, the newly added UCI has a newly added field, and the newly added field indicates the used or unused resource in the CG resource.

According to the resource indication method provided in this application, the second information further indicates at least one of the HARQ process number, the redundancy version, or new data transmission or data retransmission, where one piece of information may indicate a plurality of pieces of information, to help reduce instructions for sending information.

With reference to the first aspect, in some implementations of the first aspect, the method further includes: multiplexing, into the second information based on the first information, at least one piece of the following information: HARQ process number information, redundancy version information, new data transmission or data retransmission information, or channel occupancy time information.

In the licensed frequency band, to be specific, the fourth information indicates that the CG resource is located in the licensed frequency band, and "multiplexing" means replacement in this application. To be specific, the terminal device may replace at least one piece of the following information: the HARQ process number information, the redundancy version information, or the new data transmission or data retransmission information with the second information based on the first information. The second information may be transmitted by using the UCI. The terminal device may replace at least one piece of the following information: the HARQ process number information, the redundancy version information, the new data transmission or data retransmission information, or the channel occupancy time information, that is included in the UCI with the second information based on the first information. In addition, in the method in this application, the terminal device uses the CG-UCI for the licensed frequency band based on the first information, and uses one or more original fields of the CG-UCI to indicate the used or unused resource.

The resource indication method provided in this application allows for indicating the reporting of the used or unused resource without the need for additional bits, thereby facilitating bit conservation.

According to a second aspect, a resource indication method is provided. The method may be performed by a network device, or may be performed by a module (for example, a processor, a chip, or a chip system) used in a network device, or may be implemented by a logical node, a logical module, or software that can implement all or some functions of a network device. The method includes: sending first information, where the first information indicates to report a used or an unused resource in a configured grant CG resource in a CG period; and obtaining second information, where the second information indicates the used or unused resource in the CG resource.

Sending the first information may also be described as sending the first information to a terminal device. The CG period may be understood as a CG cycle. The CG resource may be understood as a resource, for example, a PUSCH resource, a CG PUSCH, or a CG transmission occasion, that is configured by the network device for the terminal device by using CG. The first information may indicate to report the used resource in the CG resource in the CG period, or may indicate to report the unused resource in the CG resource in the CG period.

The second information may indicate the used resource in the CG resource, or may indicate the unused resource in the CG resource. If the second information indicates the used resource in the CG resource, after the network device obtains the second information, the network device may subtract the used resource in the CG resource from an allocated total CG resource, to obtain an unused resource, so as to subsequently allocate the unused resource to another terminal device. In other words, fewer but sufficient resources may be allocated to the terminal device, to implement reasonable resource utilization. If the second information indicates the unused resource in the CG resource, after the network device obtains the second information, the network device may directly obtain the unused resource, to subsequently allocate the unused resource to another terminal device.

According to the resource indication method provided in this application, the network device indicates the terminal device to report the used or unused resource, and determines the used or unused resource based on information reported by the terminal device. The unused resource may be rescheduled by the network device to another terminal device for use, to reduce the likelihood of resource waste.

With reference to the second aspect, in some implementations of the second aspect, the method further includes: obtaining third information, where the third information indicates that the terminal device is capable of reporting the used or unused resource in the CG resource.

The terminal device is capable of reporting the used or unused resource in the CG resource, and the terminal device may inform, by using the third information, the network device that the terminal device is capable of reporting the used or unused resource in the CG resource. The network device may obtain the third information.

The terminal device does not have the capability of reporting the used or unused resource in the CG resource, and the terminal device may indicate, by using the third information, that the terminal device does not have the capability of reporting the used or unused resource in the CG resource. After obtaining the third information, the network device may determine that the terminal device does not have the capability of reporting the used or unused resource in the CG resource, and subsequently may not indicate the terminal device to report the used or unused resource in the CG resource.

According to the resource indication method provided in this application, the terminal device indicates, by using the third information, that the terminal device is capable of reporting the used or unused resource in the CG resource. The network device may obtain the third information, and determine, based on the third information, that the terminal device is capable of reporting the used or unused resource in the CG resource. For a terminal device that has the capability, the network device may indicate the terminal device to use the capability, and for a terminal device that does not have the capability, the network device may not indicate the terminal device to use the capability. This helps the network device reasonably indicates different terminal devices, to reduce a probability of an invalid instruction.

With reference to the second aspect, in some implementations of the second aspect, the CG resource is located in a licensed frequency band.

With reference to the second aspect, in some implementations of the second aspect, the second information further indicates at least one of the following: a hybrid automatic repeat request HARQ process number, a redundancy version, or new data transmission or data retransmission.

With reference to the second aspect, in some implementations of the second aspect, the method further includes: sending fourth information, where the fourth information and the first information indicate that the CG resource is located in an unlicensed frequency band or a licensed frequency band.

With reference to the second aspect, in some implementations of the second aspect, the second information further indicates at least one of the following: a HARQ process number, a redundancy version, new data transmission or data retransmission, or a channel occupancy time.

According to a third aspect, a communication apparatus is provided. The communication apparatus may be a terminal device, a module (for example, a processor, a chip, or a chip system) used in a terminal device, or a logical node, a logical module, or software that can implement all or some functions of a terminal device. The communication apparatus includes an interface unit and a processing unit. The interface unit is configured to obtain first information, where the first information indicates to report a used or an unused resource in a configured grant CG resource in a CG period; and the processing unit is configured to control the apparatus to send second information based on the first information, where the second information indicates the used or unused resource in the CG resource.

With reference to the third aspect, in some implementations of the third aspect, the interface unit is further configured to send third information, where the third information indicates that the apparatus is capable of reporting the used or unused resource in the CG resource.

With reference to the third aspect, in some implementations of the third aspect, the CG resource is located in a licensed frequency band.

With reference to the third aspect, in some implementations of the third aspect, the second information further indicates at least one of the following: a hybrid automatic repeat request HARQ process number, a redundancy version, or new data transmission or data retransmission.

With reference to the third aspect, in some implementations of the third aspect, the processing unit is further configured to multiplex, into the second information based on the first information, at least one piece of the following information: HARQ process number information, redundancy version information, or new data transmission or data retransmission information.

With reference to the third aspect, in some implementations of the third aspect, the interface unit is further configured to obtain fourth information, where the fourth information and the first information indicate that the CG resource is located in an unlicensed frequency band or a licensed frequency band.

With reference to the third aspect, in some implementations of the third aspect, the second information further indicates at least one of the following: a HARQ process number, a redundancy version, new data transmission or data retransmission, or a channel occupancy time.

With reference to the third aspect, in some implementations of the third aspect, the processing unit is configured to multiplex, into the second information based on the first information, at least one piece of the following information: HARQ process number information, redundancy version information, new data transmission or data retransmission information, or channel occupancy time information.

According to a fourth aspect, a communication apparatus is provided. The communication apparatus may be a network device, a module (for example, a processor, a chip, or a chip system) used in a network device, or a logical node, a logical module, or software that can implement all or some functions of a network device. The communication apparatus includes an interface unit. The interface unit is configured to: send first information, where the first information indicates to report a used or an unused resource in a configured grant CG resource in a CG period; and obtain second information, where the second information indicates the used or unused resource in the CG resource.

With reference to the fourth aspect, in some implementations of the fourth aspect, the interface unit is further configured to obtain third information, where the third information indicates that a terminal device is capable of reporting the used or unused resource in the CG resource.

With reference to the fourth aspect, in some implementations of the fourth aspect, the CG resource is located in a licensed frequency band.

With reference to the fourth aspect, in some implementations of the fourth aspect, the second information further indicates at least one of the following: a hybrid automatic repeat request HARQ process number, a redundancy version, or new data transmission or data retransmission.

With reference to the fourth aspect, in some implementations of the fourth aspect, the interface unit is further configured to send fourth information, where the fourth information and the first information indicate that the CG resource is located in an unlicensed frequency band or a licensed frequency band.

With reference to the fourth aspect, in some implementations of the fourth aspect, the second information further indicates at least one of the following: a HARQ process number, a redundancy version, new data transmission or data retransmission, or a channel occupancy time.

According to a fifth aspect, a communication apparatus is provided, including a processor. The processor is configured to perform the method according to any aspect and any possible implementation of any aspect.

The communication apparatus may further include a memory, configured to store instructions and data. The memory is coupled to the processor. When executing the instructions stored in the memory, the processor may implement the methods described in the foregoing aspects. The communication apparatus may further include a communication interface. The communication interface is used by the communication apparatus to communicate with other devices. For example, the communication interface may be a transceiver, a circuit, a bus, a module, or another type of communication interface.

According to a sixth aspect, a communication system is provided, and includes the communication apparatus according to the third aspect and the communication apparatus according to the fourth aspect.

According to a seventh aspect, a communication apparatus is provided, and includes a processor, where the processor is coupled to a memory, and the memory is configured to store instructions; and when the processor invokes the instructions, the communication apparatus is caused to perform the method according to any possible implementation of any aspect.

According to an eighth aspect, a chip system is provided, and includes a processor configured to invoke instructions from a memory and run the instructions, so that the chip system is caused to perform the method according to any possible implementation of any aspect.

According to a ninth aspect, a computer-readable storage medium is provided, where the computer-readable storage medium stores a computer program (which may also be referred to as code or instructions), and when the computer program is run on a computer, the computer is caused to perform the method according to any possible implementation of any aspect.

According to a tenth aspect, a computer program product is provided, where the computer program product includes a computer program (which may also be referred to as code or instructions), and when the computer program is run, a computer is caused to perform the method according to any possible implementation of any aspect.

**BRIEF DESCRIPTION OF DRAWINGS**

FIG. 1 to FIG. 3 are schematic flowcharts of several communication systems to which an embodiment of this application is applicable;
FIG. 4 is a diagram of arrival of a video frame;
FIG. 5 and FIG. 6 are diagrams of two types of uplink data transmission;
FIG. 7 is a schematic flowchart of a resource indication method according to an embodiment of this application;
FIG. 8 is a schematic flowchart of a resource indication method for type 1 according to an embodiment of this application;
FIG. 9 is a schematic flowchart of a resource indication method for type 2 according to an embodiment of this application;
FIG. 10 is a block diagram of a communication apparatus according to an embodiment of this application; and
FIG. 11 is a block diagram of another communication apparatus according to an embodiment of this application.

## DESCRIPTION OF EMBODIMENTS

The following describes technical solutions of this application with reference to accompanying drawings.

In recent years, with continuous development of 5th generation mobile network (5th generation mobile network, 5G) communication systems, data transmission latency is continuously reduced, and transmission capacity is increasingly large. The 5G communication system gradually penetrates into some multimedia services that have high real-time and large data capacity requirements, for example, video transmission, cloud gaming (cloud gaming, CG), and extended reality (extended reality, XR). The XR includes virtual reality (virtual reality, VR), cloud virtual reality (cloud VR), augmented reality (augmented reality, AR), and cloud augmented reality (cloud AR).

With the rapid increase of a communication transmission rate, real-time video transmission services have gradually become one of core services in current networks. With continuous progress and improvement of XR technologies, related industry booms accordingly. Nowadays, VR technologies, as a form of XR, have permeated various fields closely related to human production and daily life, including education, entertainment, healthcare, environmental conservation, transportation, and public health. In contrast with conventional video services, VR offers benefits such as multiple perspectives and enhanced interactivity, delivering users an entirely new visual experience. VR integrates various technologies such as computer graphics and multimedia, to simulate functions of human sensory organs like vision, hearing, and touch, creating an immersive experience where users fell as though they are physically present within a computer-generated virtual environment. This allows for real-time interaction through language and gestures, enhancing the sense of immersion. Through the VR technologies, users not only experience the realism of the actual world but also transcend temporal and spatial constraints to explore the wonders of virtual realms. On the other hand, AR employs computer technologies to overlay virtual information onto the physical world, which is then displayed via devices like smartphones, tablets, and smart glasses, enabling perception that blends reality with digital elements, thereby enriching tangible surroundings. In essence, both VR and AR augment objects with additional layers of data, heightening three-dimensionality while intensifying visual impact and interactive engagement.

To better understand the XR technologies, application scenarios of the XR technologies are first described in embodiments of this application.

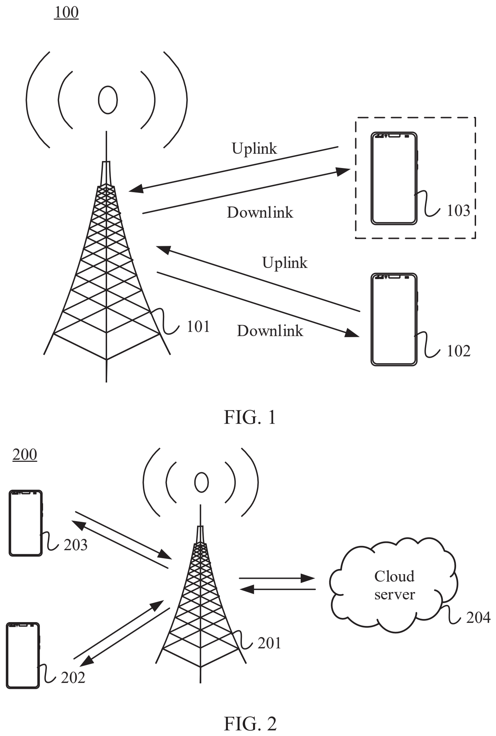

FIG. 1 is a schematic flowchart of a communication system 100. As shown in FIG. 1, the communication system 100 includes a network device 101, a terminal device 102, and a terminal device 103 (optional). The network device 101 may communicate with one terminal device, for example, the terminal device 102, or may communicate with a plurality of terminal devices, for example, the terminal device 102 and the terminal device 103. This is not limited in embodiments of this application.

The terminal device 102 may send uplink data to the network device 101, and the network device 101 may send downlink data to the terminal device 102. The terminal device 103 may send uplink data to the network device 101, and the network device 101 may send downlink data to the terminal device 103.

For different XR services, service models of uplink data and downlink data are usually different. A display change of VR scenario content is caused by a posture or a location (action). In a VR scenario, the uplink data sent by the terminal device 102 or the terminal device 103 is mainly location and posture information, and has a small data amount that is usually only dozens of kbps. The downlink data sent by the network device 101 to the terminal device 102 or the terminal device 103 is mainly a rendered video stream, and has a large data amount that may reach dozens of to hundreds of megabits per second (megabits per second, Mbps). A display change of AR scenario content is caused by a change of a fixation focus target and a change of a spatial relationship (action) between a location and a fixation point. In an AR scenario, the uplink data sent by the terminal device 102 or the terminal device 103 includes visual information (including a depth) required for perception. Therefore, the uplink data is mainly a clear and stable picture or video stream with a large data amount, or may be some extracted environment characteristic information. Based on industry research, an uplink network speed of approximately 2 Mbps is required for the initial experience of interactive AR services, while speeds ranging from 10 Mbps to 20 Mbps are necessary for enhanced experience.

Compared with the VR and the AR, the cloud virtual reality and the cloud augmented reality add cloud servers. The cloud virtual reality and the cloud augmented reality introduce cloud computing and cloud rendering concepts and technologies to VR and AR service applications. With high-speed and stable networks, a display output and an audio output on a cloud are encoded, compressed, and then transmitted to a terminal device. In this way, VR and AR service content can be migrated to the cloud and rendered to the cloud, and the terminal device can also meet lightweight and mobility requirements.

FIG. 2 is a schematic flowchart of another communication system 200. As shown in FIG. 2, the communication system 200 may include a network device 201, a terminal device 202, a terminal device 203, and a cloud server 204. The terminal device 202 may implement an AR service, and may also be referred to as an AR terminal device. The terminal device 203 may implement a VR service, and may also be referred to as a VR terminal device.

The terminal device 202 may obtain the AR service from the cloud server 204 by using the network device 201. The terminal device 203 may obtain the VR service from the cloud server 204 by using the network device 201.

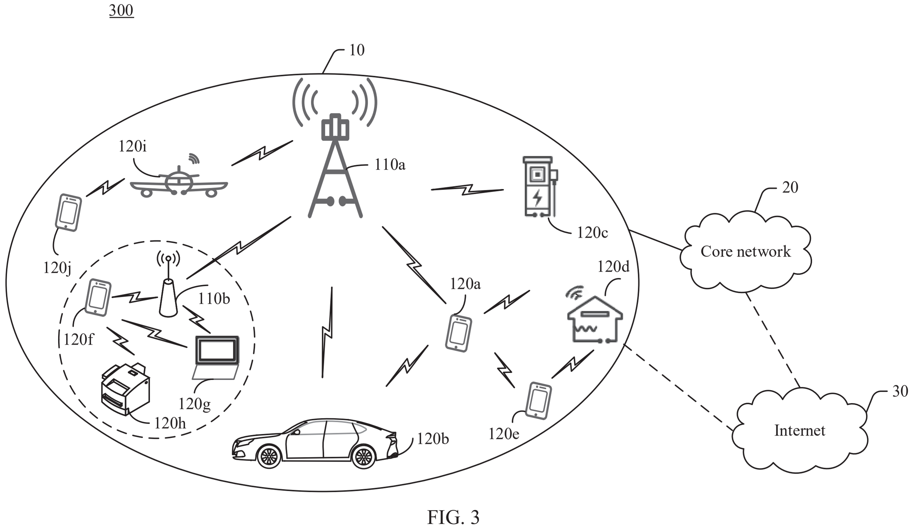

In addition, the XR service is also applicable to a radio access network (radio access network, RAN) scenario. For example, FIG. 3 is a schematic flowchart of still another communication system 300. As shown in FIG. 3, the communication system 300 includes a RAN 10 and a core network (core network, CN) 20. The RAN 10 includes at least one RAN node (for example, 110a and 110b in FIG. 3, which are collectively referred to as 110) and at least one terminal (for example, 120a to 120j in FIG. 3, which are collectively referred to as 120). The RAN 10 may further include another RAN node, for example, a wireless relay device and/or a wireless backhaul device (not shown in FIG. 3). The terminal 120 is connected to the RAN node 110 in a wireless manner. The RAN node 110 is connected to the core network 20 and/or an Internet 30 in a wireless or wired manner. A core network device in the core network 20 and the RAN node 110 in the RAN 10 may be different physical devices, or may be a same physical device that integrates a logical function of the core network and a logical function of the radio access network.

The RAN 10 may be a cellular system related to the 3rd generation partnership project (3rd generation partnership project, 3GPP), for example, a 4th generation (4th generation, 4G) or 5th generation (5th generation, 5G) mobile communication system, or a future-oriented evolved system (for example, a 6th generation (6th generation, 6G) mobile communication system). The RAN 10 may alternatively be an open access network (open RAN, O-RAN, or ORAN), a cloud radio access network (cloud radio access network, CRAN), or a wireless fidelity (wireless fidelity, Wi-Fi) system. The RAN 10 may alternatively be a communication system that integrates the foregoing two or more systems.

The RAN node 110 may also be sometimes referred to as an access network device, a RAN entity, an access node, or the like, and forms a part of the communication system, to help the terminal implement radio access. A plurality of RAN nodes 110 in the communication system 300 may be nodes of a same type, or may be nodes of different types. In some scenarios, roles of the RAN node 110 and the terminal 120 are relative. For example, a network element 120i in FIG. 3 may be a helicopter or an uncrewed aerial vehicle, and may be configured as a mobile base station. For the terminal 120j that accesses the RAN 10 through the network element 120i, the network element 120i is a base station. However, for the base station 110a, the network element 120i is a terminal. Both the RAN node 110 and the terminal 120 are sometimes referred to as communication apparatuses. For example, the network elements 110a and 110b in FIG. 3 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 3), a micro base station or an indoor station (for example, 110b in FIG. 3), a relay node or a donor node, or a radio controller in a CRAN scenario. Optionally, the RAN node may be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in this application may also be implemented by using a software function running on hardware, or may be implemented by using an instantiated virtualization function on a platform (for example, a cloud platform). The RAN node in this application may alternatively be a logical node, a logical module, or software that can implement all or some functions of the RAN node.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

It can be understood that the RAN node may also be referred to by different names, for example, an access network device. In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal 120 may alternatively be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal device is not limited in embodiments of this application.

In embodiments of this application, data can be transmitted between the access network device and the terminal device. For example, the terminal device may send data or information to the access network device, and/or receive data or information from the access network device; and the access network device may also send data or information to the terminal device, and/or receive data or information from the terminal device. "Sending the information to the terminal device" may be understood as a destination end of the information being the terminal device, and may include directly or indirectly sending the information to the terminal device. "Receiving the information from the terminal device" may be understood as a source end of the information being the terminal device, and may include directly or indirectly receiving the information from the terminal device. Information may undergo necessary processing between the source end for sending the information and the destination end, for example, a format change. However, the destination end may understand valid information from the source end. Similar descriptions in this application may be understood similarly, and details are not described herein.

In XR scenarios, data transmitted between the access network device and the terminal device may be video data. For XR transmission services, cloud virtual reality transmission services, cloud augmented reality transmission services, and video transmission services, service models usually arrive periodically based on a frame rate.

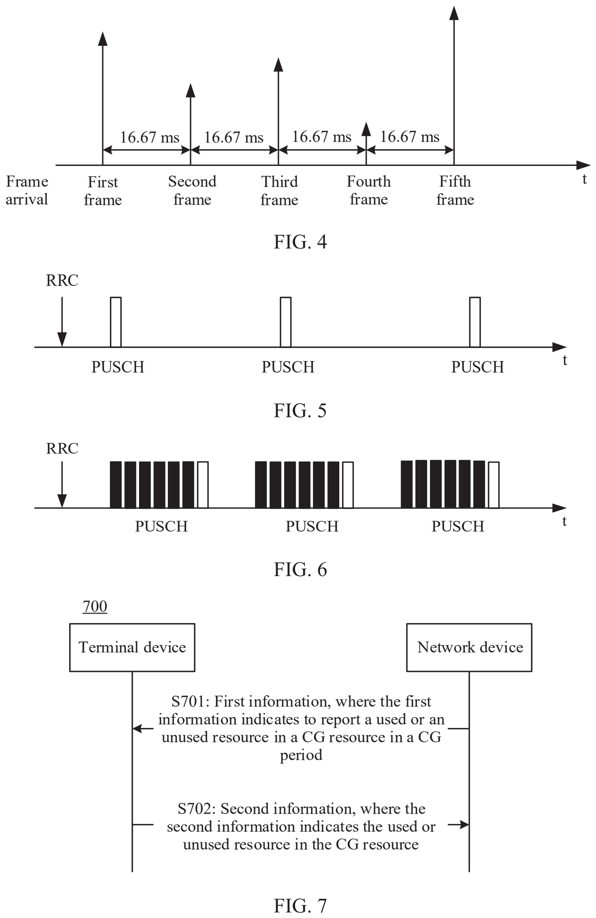

For example, FIG. 4 is a diagram of arrival of a video frame. As shown in FIG. 4, for a video with a frame rate of 60 frames per second (frames per second, FPS), under ideal conditions, each image frame arrives at an interval of 16.67 milliseconds (milliseconds, ms). FIG. 4 shows five picture frames: a first frame, a second frame, a third frame, a fourth frame, and a fifth frame, with a consistent temporal interval of 16.67 ms between every two adjacent frames. Within this figure, a length of an arrow indicates a size of a frame, and longer arrows denote larger frames while shorter ones indicate smaller frames. It can be learned from FIG. 4 that a length of the fifth frame is the longest, making it the largest frame; and a length of the fourth frame is the shortest, making it the smallest frame.

For transmission services, cloud virtual reality transmission services, cloud augmented reality transmission services, and video transmission services, data amounts are usually large. For example, a single 4K video frame can range from approximately 30 kilobytes to 100 kilobytes (kilobytes, KB). In addition, sizes of video frames usually vary greatly due to differences in compression rates and frame types of the video frames are different.

In the communication system 100, the communication system 200, or the communication system 300, before the terminal device sends the uplink data, the network device needs to configure an uplink scheduling resource for the terminal device. It may be understood that, in the communication system 100, the terminal device may be the terminal device 102 or the terminal device 103, and the network device may be the network device 101; in the communication system 200, the terminal device may be the terminal device 202 or the terminal device 203, and the network device may be the network device 201; and in the communication system 300, the terminal device may be the terminal 120, and the network device may be an access network device.

The terminal device periodically sends uplink data. Currently, uplink configured scheduling (configured scheduling, CS) or configured grant (configured grant, CG) is suitable for periodic uplink service transmission. The CG means that in an uplink transmission process, an uplink scheduling resource needs to be allocated to the terminal device only once by the network device by using radio resource control (radio resource control, RRC) signaling or downlink control information (downlink control information, DCI), and then the terminal device may periodically and repeatedly use a same time-frequency resource to perform uplink transmission.

There are two types of CG. Type 1 is that the network device configures, by using the RRC signaling, a related parameter of CG transmission, for example, a CG period, a time domain resource and a frequency domain resource of the CG, or a quantity of PUSCHs, and also configures a corresponding CG resource by using the RRC signaling. Type 2 is that the network device configures, by using RRC, a related parameter of CG transmission, for example, a CG period, and configures and activates a corresponding CG resource by using the DCI.

The network device may configure one PUSCH or a plurality of PUSCHs for the terminal device in one CG period via the RRC signaling.

If the network device configures one PUSCH for the terminal device in one CG period via the RRC signaling, the terminal device may transmit the uplink data through the PUSCH.

For example, FIG. 5 is a diagram of one type of uplink data transmission. As shown in FIG. 5, a network device configures a related parameter of CG transmission by using RRC signaling and activates a corresponding CG resource by using the RRC signaling. The CG resource may include one PUSCH configured in one CG period. A terminal device periodically transmits uplink data on the one PUSCH.

If a network device configures a plurality of PUSCHs for a terminal device in one CG period via RRC signaling, the terminal device may determine a used PUSCH based on a data amount of uplink data. If the data amount of the uplink data is greater than an amount of data that can be carried on the PUSCH, the terminal device may transmit data that is not transmitted and remaining data in a dynamic scheduling manner. If the data amount of the uplink data is less than an amount of data that can be carried on the PUSCH, the terminal device may determine, based on the data amount of the uplink data, a quantity of used PUSCHs. Data amounts of uplink data transmitted by the terminal device in periods may be the same or may be different. This is not limited in embodiments of this application.

For example, FIG. 6 is a diagram of another type of uplink data transmission. As shown in FIG. 6, a network device configures a related parameter of CG transmission by using RRC signaling and activates a corresponding CG resource by using the RRC signaling. The CG resource may include a plurality of PUSCHs such as seven PUSCHs configured in one CG period. A terminal device may determine, in each period, used PUSCHs based on an amount of uplink data. In the example shown in FIG. 6, an amount of of uplink data transmitted in each period is the same. The terminal device uses six PUSCHs in each period for transmission of the uplink data.

If the data amount of the uplink data sent by the terminal device is less than an amount of data that can be carried on the PUSCHs, only some of the PUSCHs are used, resulting in a PUSCH waste.

In view of this, embodiments of this application provide a resource indication method and a communication apparatus. A network device may indicate a terminal device to report a used or an unused CG resource, for example, a used or an unused PUSCH, and may obtain the used or unused CG resource based on information reported by the terminal device. This helps subsequently allocate an appropriate CG resource to the terminal device, to reduce a probability of a CG resource waste.

For ease of understanding of embodiments of this application, the following briefly describes CG-UCI in this application.

If the network device configures a parameter "cg-RetransmissionTimer" for the terminal device, a CG resource configured by the network device for the terminal device is located in an unlicensed frequency band, and UCI sent by the terminal device to the network device through a PUSCH includes the CG-UCI. A bit sequence of the CG-UCI includes

$\tilde{o}_0^{CG-UCI}$, $\tilde{o}_1^{CG-UCI}$, $\cdots$, and $\tilde{o}_{O^{CG-UCI}-1}^{CG-UCI}$. In other words, fields included in the CG-UCI are: $\tilde{o}_0^{CG-UCI}$, $\tilde{o}_1^{CG-UCI}$, $\cdots$,

and $\tilde{o}_{O^{CG-UCI}-1}^{CG-UCI}$.

Specific representations of $\tilde{o}_0^{CG-UCI}$, $\tilde{o}_1^{CG-UCI}$, $\cdots$, and $\tilde{o}_{O^{CG-UCI}-1}^{CG-UCI}$ may be shown in Table 1. A mapping order between content shown in Table 1 and $\tilde{o}_0^{CG-UCI}$, $\tilde{o}_1^{CG-UCI}$, $\cdots$, and $\tilde{o}_{O^{CG-UCI}-1}^{CG-UCI}$ is from top to bottom.

Table 1

| Field | Bit width |
|---|---|
| Hybrid automatic repeat request process number | 5 or 4 |
| Redundancy version | 2 |
| New data indicator | 1 |
| Channel occupancy time | $[\log_2 C]$, 1, or 0 |

As shown in Table 1, the fields included in the CG-UCI are: the HARQ process number, the redundancy version (Redundancy version), the new data indicator (New data indicator), and the channel occupancy time (Channel Occupancy Time sharing information). The HARQ process number occupies 5 or 4 bit widths, namely, 5 or 4 bits. The redundancy version occupies 2 bits. The new data indicator occupies 1 bit, and indicates new data transmission or data retransmission. The channel occupancy time occupies $[\log_2 C]$, 1 or 0 bits, where C is a configured constant.

For ease of understanding, the following points are first described.

First, to clearly describe the technical solutions in embodiments of this application, terms such as "first" and "second" are used in embodiments of this application to distinguish between same items or similar items that provide basically same functions and purposes. For example, first information and second information are merely used to distinguish between different information. A person skilled in the art may understand that the terms such as "first" and "second" do not limit a quantity or a sequence, and the terms such as "first" and "second" do not indicate a definite difference, either.

Second, "at least one" means one or more, and "a plurality of' means two or more. The term "and/or" describes an association relationship between associated objects and may indicate three relationships. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be singular, or may be plural.

Third, in embodiments of this application, descriptions such as "when", "in a case of", and "if" all mean that a device (for example, a terminal device or an access network device described below) performs corresponding processing in a specific objective situation, and are not intended to limit a time. In addition, the device (for example, the terminal device or the access network device described below) is not required to necessarily perform a determining action during implementation. This does not mean that there is another limitation.

With reference to the accompanying drawings, the following describes in detail a communication method provided in this application.

It may be understood that in a schematic interaction flowchart of this application, an example in which a terminal device and a network device are used as entities for performing interaction is used to illustrate the method provided in this application. However, the entities for performing interaction are not limited in this application.

For example, the network device may alternatively be a chip, a chip system, or a processor used in a network device, or may be a logical node, a logical module, or software that can implement all or some functions of a network device. For another example, the terminal device may be a chip, a chip system, or a processor used in a terminal device, or may be a logical node, a logical module, or software that can implement all or some functions of a terminal device.

FIG. 7 is a schematic flowchart of a resource indication method 700 according to an embodiment of this application. The method 700 may be applied to the communication system 100 shown in FIG. 1, the communication system 200 shown in FIG. 2, or the communication system 300 shown in FIG. 3. However, this is not limited in embodiments of this application.

As shown in FIG. 7, the method 700 may include the following steps.

S701: A network device sends first information, where the first information indicates to report a used or an unused resource in a CG resource in a CG period, and a terminal device obtains the first information.

That the network device sends the first information may also be described as that the network device sends the first information to the terminal device. This is not limited in embodiments of this application. The CG period may be understood as a CG cycle. The CG resource may be understood as a resource, for example, a PUSCH resource, a CG PUSCH, or a CG transmission occasion, that is configured by the network device for the terminal device by using CG. The first information may indicate to report the used resource in the CG resource in the CG period, or may indicate to report the unused resource in the CG resource in the CG period.

That the terminal device obtains the first information may also be described as that the terminal device receives the first information. If uplink data sent by the terminal device in the CG period does not fully use the CG resource, the terminal device may report the used or unused resource to the network device based on the first information.

S702: The terminal device sends second information based on the first information, where the second information indicates the used or unused resource in the CG resource, and the network device obtains the second information.

The second information may indicate the used resource in the CG resource, or may indicate the unused resource in the CG resource. It may be understood that if the first information indicates to report the used resource in the CG resource in the CG period, the second information indicates the used resource in the CG resource. If the first information indicates to report the unused resource in the CG resource in the CG period, the second information indicates the unused resource in the CG resource.

If the second information indicates the used resource in the CG resource, after the network device obtains the second information, the network device may subtract the used resource in the CG resource from an allocated total CG resource, to obtain an unused resource, so as to subsequently allocate the unused resource to another terminal device. In other words, fewer but sufficient resources may be allocated to the terminal device, to implement reasonable resource utilization. If the second information indicates the unused resource in the CG resource, after the network device obtains the second information, the network device may directly obtain the unused resource, to subsequently allocate the unused resource to another terminal device.

For example, the terminal device may transmit the second information based on the first information by using UCI, where the second information indicates the used or unused resource in the CG resource. The network device may obtain the second information by obtaining the UCI, to obtain the used or unused resource in the CG resource.

According to the resource indication method provided in this embodiment of this application, the network device indicates the terminal device to report the used or unused resource, and determines the used or unused resource based on information reported by the terminal device. This helps subsequently reallocate the unused resource to another terminal device, to reduce a probability of a CG resource waste.

The network device may indicate, by using the first information, to report the used or unused resource in the CG resource in the CG period, or may not indicate to report the used or unused resource.

When the CG resource is sufficient, to prevent long data transmission latency caused by CG resource insufficiency, the network device may not indicate to report the used or unused resource in the CG resource in the CG period, and allocate a fixed resource to different terminal devices. When the CG resource is insufficient, to reduce the probability of the CG resource waste, the network device may indicate, by using the first information, to report the used or unused resource in the CG resource in the CG period, to help allocate different resources to different terminal devices. In this way, the probability of the CG resource waste is reduced by reasonably allocating resources.

For example, the network device may indicate or not indicate, by using RRC signaling, to report the used or unused resource in the CG resource in the CG period. The first information may be "betaoffsetXR-UCI", "cg-unusedpusch", or "cg-unusedpusch=1". If the RRC signaling includes "betaoffsetXR-UCI" or "cg-unusedpusch", or the RRC signaling includes "cg-unusedpusch=1", the terminal device obtains the RRC signaling, and may determine, based on the RRC signaling, that the used or unused resource in the CG resource in the CG period needs to be reported. If the RRC signaling does not include "betaoffsetXR-UCI" or "cg-unusedpusch", or the RRC signaling includes "cg-unusedpusch=0", the terminal device obtains the RRC signaling, and may determine, based on the RRC signaling, that the used or unused resource in the CG resource in the CG period does not need to be reported. Meaning of "betaoffsetXR-UCI" is an expansion factor sent on a PUSCH by using XR-UCI, to control a code rate offset of the XR-UCI relative to uplink data. A larger configured value of this parameter results in a lower code rate of the XR-UCI, higher reliability, but higher overhead. The meaning of "betaoffsetXR-UCI" is the same as that of $\beta_{\text{offset}}^{\text{HARQ-ACK}}$ in conventional technologies. "betaoffsetXR-UCI", "cg-unusedpusch", or "cg-unusedpusch=1" may be configured by using RRC, or may be indicated by using DCI. This is not limited in embodiments of this application.

If the first information is "betaoffsetXR-UCI", "cg-unusedpusch", or "cg-unusedpusch=1", instructing the terminal device to report the used or unused resource in the CG resource in the CG period includes the following two cases:
In a first case, the first information is "betaoffsetXR-UCI", "cg-unusedpusch", or "cg-unusedpusch=1", it may indicate to report the used resource in the CG resource in the CG period. In a second case, the first information is "betaoffsetXR-UCI", "cg-unusedpusch", or "cg-unusedpusch=1", it may indicate the terminal device to report the unused resource in the CG resource in the CG period.

The method provided in this embodiment of this application is applicable to two types of CG. Type 1 is that the network device configures a CG resource in the CG period by using RRC signaling, and configures the first information by using the RRC signaling, to indicate to report the used or unused resource in the CG resource in the CG period. The terminal device may obtain the CG resource by obtaining the RRC signaling, and transmit the uplink data by using the CG resource. When the uplink data does not fully use the CG resource, the terminal device reports the used or unused resource in the CG resource in the CG period based on the RRC signaling and by using the second information. Type 2 is that the network device configures a CG resource in the CG period by using RRC signaling, activates the CG resource by using DCI, and transmits the first information by using the RRC signaling or the DCI, to indicate to report the used or unused resource in the CG resource in the CG period. The terminal device may obtain the CG resource by obtaining the RRC signaling, transmit the uplink data by using the CG resource by obtaining the DCI, and report, based on the RRC signaling or the DCI and by using the second information, the used or unused resource in the CG resource in the CG period when the uplink data does not fully use the CG resource.

Resource indication methods for the two types of CG are described in detail by using an example in which the CG resource in the CG period is a plurality of PUSCH resources, the first information indicates to report an unused resource in the plurality of PUSCH resources in the CG period, and the second information is transmitted by using the UCI.

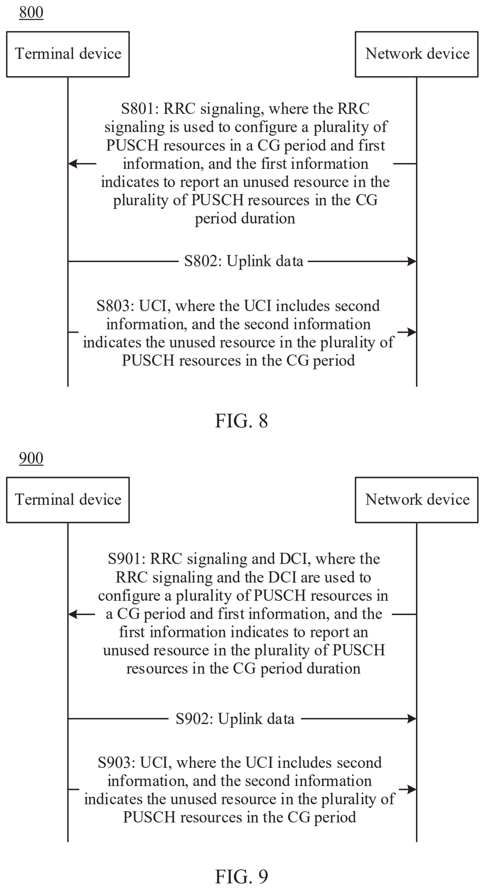

For example, FIG. 8 is a schematic flowchart of a resource indication method for type 1. As shown in FIG. 8, the method 800 may include the following steps.

S801: A network device sends RRC signaling to a terminal device, where the RRC signaling is used to configure a plurality of PUSCH resources in a CG period and first information, and the first information indicates to report an unused resource in the plurality of PUSCH resources in the CG period. Correspondingly, the terminal device obtains the RRC signaling.

The RRC signaling may include "betaoffsetXR-UCI", "cg-unusedpusch", or "cg-unusedpusch=1 ", to indicate to report the unused resource in the plurality of PUSCH resources in the CG period. The RRC signaling is used to activate the plurality of configured PUSCH resources.

S802: The terminal device sends uplink data to the network device based on the RRC signaling.

The terminal device may send the uplink data by using all or some of the plurality of configured PUSCH resources.

S803: If the uplink data does not fully use the plurality of PUSCH resources, the terminal device sends UCI to the network device, where the UCI includes second information, and the second information indicates the unused resource in the plurality of PUSCH resources in the CG period.

The uplink data and the UCI may be sent simultaneously, or may be sent at different time. This is not limited in embodiments of this application.

For example, in the example shown in FIG. 6, the second information included in the UCI sent by the terminal device to the network device indicates a quantity of unused PUSCH resources in the plurality of PUSCH resources in the CG period.

For example, FIG. 9 is a schematic flowchart of a resource indication method for type 2. As shown in FIG. 9, the method 900 may include the following steps.

S901: A network device sends RRC signaling and DCI to a terminal device, where the RRC signaling and the DCI are used to configure a plurality of PUSCH resources in a CG period and first information, the first information indicates to report an unused resource in the plurality of PUSCH resources in the CG period, and the DCI is further used to activate the plurality of configured PUSCH resources. Correspondingly, the terminal device obtains the RRC signaling.

The RRC signaling may include "betaoffsetXR-UCI", "cg-unusedpusch", or "cg-unusedpusch=1", to indicate to report the unused resource in the plurality of PUSCH resources in the CG period.

S902: The terminal device sends uplink data to the network device based on the RRC signaling and the DCI.

The terminal device may send the uplink data by using all or some of the plurality of configured PUSCH resources.

S903: If the uplink data does not fully use the plurality of PUSCH resources, the terminal device sends UCI to the network device, where the UCI includes second information, and the second information indicates the unused resource in the plurality of PUSCH resources in the CG period.

The uplink data and the UCI may be sent simultaneously, or may be sent at different time. This is not limited in embodiments of this application.

In an optional embodiment, the method 700 further includes: The terminal device sends third information, where the third information indicates that the terminal device is capable of reporting the used or unused resource in the CG resource; and the network device obtains the third information, and may determine that the terminal device is capable of reporting the used or unused resource in the CG resource.

For avoidance of decoding errors of the network device caused when the network device indicates the terminal device to report the used or unused resource in the CG resource but the terminal device lacks the reporting capability, if the terminal device is capable of reporting the used or unused resource in the CG resource, the terminal device sends, after the terminal device establishes a connection state to the network device, third information to the network device, to inform the network device that the terminal device is capable of reporting the used or unused resource in the CG resource. The network device can determine, based on requirements, whether to indicate the terminal device to use the capability.

For example, in the method 800, before S801, after the terminal device establishes a connection state to the network device, and if the terminal device is capable of reporting the used or unused resource in the CG resource, the terminal device sends the third information to the network device, to inform the network device that the terminal device is capable of reporting the used or unused resource in the CG resource.

For example, in the method 900, before S901, after the terminal device establishes a connection state to the network device, and if the terminal device is capable of reporting the used or unused resource in the CG resource, the terminal device sends the third information to the network device, to inform the network device that the terminal device is capable of reporting the used or unused resource in the CG resource.

If the terminal device does not have the capability of reporting the used or unused resource in the CG resource, the terminal device may send the third information to the network device, where the third information indicates that the terminal device does not have the capability of reporting the used or unused resource in the CG resource. After obtaining the third information, the network device may determine that the terminal device does not have the capability of reporting the used or unused resource in the CG resource, and subsequently may not indicate the terminal device to report the used or unused resource in the CG resource.

According to the resource indication method provided in embodiments of this application, the terminal device informs, by using the third information, the network device that the terminal device is capable of reporting the used or unused resource in the CG resource. This helps prevent a reduction in service reliability due to a decoding error caused when the network device indicates the terminal device to report the used or unused resource in the CG resource, the terminal device does not have the reporting capability, and the network device mistakenly considers that the terminal device is capable of reporting the used or unused resource in the CG resource. In addition, for a terminal device that has the capability, the network device may indicate the terminal device to use the capability, and for a terminal device that does not have the capability, the network device may not indicate the terminal device to use the capability. This helps the network device reasonably indicates different terminal devices, to reduce a probability of an invalid instruction.

The CG resource in the method 700 may be located in a licensed frequency band. To be specific, when the CG resource is located in the licensed frequency band, the terminal device may send the second information indicating the used or unused resource in the CG resource. Alternatively, the CG resource in the method 700 may be located in a licensed frequency band, or may be located in an unlicensed frequency band. To be specific, when the CG resource is located in the licensed frequency band or the unlicensed frequency band, the terminal device may send the second information indicating the used or unused resource in the CG resource.

In an example, the CG resource in the method 700 may be located in the licensed frequency band.

The licensed frequency band, also referred to as an authorized frequency band, is a frequency domain resource that can be used only after being licensed by an administration department of the telecom industry. That the CG resource is located in the licensed frequency band is configured by the network device for the terminal device.

For example, the network device may configure, for the terminal device by using RRC signaling, that the CG resource is located in the licensed frequency band. Alternatively, information configured by the network device for the terminal device does not include "cg-RetransmissionTimer", so that the terminal device may determine that the configured CG resource is located in the licensed frequency band. Alternatively, the RRC signaling sent by the network device to the terminal device does not include "cg-RetransmissionTimer", so that the terminal device may determine that the configured CG resource is located in the licensed frequency band.

The terminal device sends the second information to the network device in the licensed frequency band, where the second information indicates the used or unused resource in the CG resource. In an example, the second information may be transmitted by using UCI. However, the UCI does not include CG-UCI in the licensed frequency band, and therefore does not coexist with the CG-UCI. The UCI may be different from UCI specified in an existing protocol, and is newly added UCI indicating the used or unused resource in the CG resource. The UCI may include XR-UCI, and the XR-UCI indicates the used or unused resource in the CG resource. The XR-UCI is merely an example of a name. This is not limited in embodiments of this application. A bit sequence of the XR-UCI may include $a_0, a_1, a_2, a_3, \cdots, a_{A-1}$, where

$a_i = \tilde{o}_i^{XR-UCI}$, $i = 0,1,\ldots,O^{XR-UCI}-1$, and $A = O^{XR-UCI}$. In other words, the bit sequence of the XR-UCI includes

$\tilde{o}_0^{XR-UCI}$, $\tilde{o}_1^{XR-UCI}$, $\cdots$, and $\tilde{o}_{O^{XR-UCI}-1}^{XR-UCI}$. The bit sequences $\tilde{o}_0^{XR-UCI}$, $\tilde{o}_1^{XR-UCI}$, $\cdots$, and $\tilde{o}_{O^{XR-UCI}-1}^{XR-UCI}$ of the XR-UCI may be sequentially mapped based on information included in the XR-UCI design.

For example, the XR-UCI may be similar to the CG-UCI, but only has the field of unused resource, which is illustrated in Table 2.

Table 2

| Field | Bit width |
|---|---|
| Unused resource | n |

As shown in Table 2, the field of the XR-UCI includes the unused resource, the unused resource occupies n bits, where n may be a positive integer. A specific value of n is not limited in embodiments of this application.

According to the resource indication method provided in this application, the CG resource is located in the licensed frequency band, and the terminal device reports the used or unused resource in the CG resource to the network device based on the first information. This helps distinguish whether the terminal device is capable of indicating the used or unused resource, to ensure the service reliability.

Optionally, the second information in the method 700 further indicates at least one of the following: a hybrid automatic repeat request HARQ process number, a redundancy version, or new data transmission or data retransmission.

The terminal device sends the second information to the network device in the licensed frequency band. In addition to indicating the used or unused resource in the CG resource, the second information may further indicate at least one of the HARQ process number, the redundancy version, or new data transmission or data retransmission.

If the second information is transmitted by using the UCI, in addition to indicating the used or unused resource in the CG resource, the UCI may further indicate at least one of the HARQ process number, the redundancy version, or new data transmission or data retransmission.

For example, the UCI indicates the unused resource in the CG resource, the HARQ process number, the redundancy version, and new data transmission or data retransmission. A bit sequence included in the UCI or a field included in the UCI may be shown in Table 3.

Table 3

| Field | Bit width |
|---|---|
| HARQ process number | 5 or 4 |
| Redundancy version | 2 |
| New data indicator | 1 |

(continued)

| Field | Bit width |
|---|---|
| Unused resource | n |

As shown in Table 3, the fields included in the UCI are: the HARQ process number, the redundancy version, the new data indicator, and the unused resource. The HARQ process number occupies 5 or 4 bits. The redundancy version occupies 2 bits. The new data indicator occupies 1 bit, and indicates new data transmission or data retransmission. The unused resource occupies n bits, and n may be a positive integer. A specific value of n is not limited in embodiments of this application. If the field of the UCI includes the HARQ process number, it indicates that reporting the HARQ process number by using UCI is determined by the terminal device.

For example, the UCI indicates the unused resource in the CG resource, the redundancy version, and new data transmission or data retransmission. A bit sequence included in the UCI or a field included in the UCI may be shown in Table 4.

Table 4

| Field | Bit width |
|---|---|
| Redundancy version | 2 |
| New data indicator | 1 |
| Unused resource | n |

As shown in Table 4, the fields included in the UCI are: redundancy version, new data indicator, and unused resource. The redundancy version occupies 2 bits. The new data indicator occupies 1 bit, and indicates new data transmission or data retransmission. The unused resource occupies n bits, and n may be a positive integer. A specific value of n is not limited in embodiments of this application. The fields of the UCI do not include the HARQ process number, it indicates that the HARQ process number is calculated by using a formula of a HARQ process number in the licensed frequency band.

In this implementation, the second information further indicates at least one of the HARQ process number, the redundancy version, or new data transmission or data retransmission, where one piece of information may indicate a plurality of pieces of information, to help reduce instructions for sending information.

Optionally, the method 700 may further include: multiplexing, into the second information based on the first information, at least one piece of the following information: HARQ process number information, redundancy version information, or new data transmission or data retransmission information.

"Multiplexing" means replacement in this embodiment of this application. To be specific, the terminal device may replace at least one piece of the following information: the HARQ process number information, the redundancy version information, or the new data transmission or data retransmission information with the second information based on the first information. The second information may be transmitted by using the UCI. The terminal device may replace at least one piece of the following information: the HARQ process number information, the redundancy version information, or the new data transmission or data retransmission information that is included in the UCI with the second information based on the first information. In addition, in the method in embodiments of this application, the terminal device uses one or more original fields of the CG-UCI in the UCI on the licensed frequency band based on the first information to indicate the used or unused resource.

For example, the UCI includes HARQ process number information, redundancy version information, and new data transmission or data retransmission information. The terminal device may replace, based on the first information, the redundancy version information and the new data transmission or data retransmission information that are included in the UCI with the second information. In this case, fields included in the UCI after replacement may be shown in Table 5.

Table 5

| Field | Bit width |
|---|---|
| HARQ process number | 5 or 4 |
| Unused resource | n |

As shown in Table 5, the fields included in the UCI are: the HARQ process number and the unused resource. The HARQ process number occupies 5 or 4 bits. The unused resource occupies n bits, and n may be a positive integer. A specific value of n is not limited in embodiments of this application. If the field of the UCI includes the HARQ process number, it indicates that reporting the HARQ process number by using UCI is determined by the terminal device.

This implementation allows for indicating the reporting of the used or unused resource without the need for additional bits, thereby facilitating bit conservation.

In another example, the method 700 may further include: The network device sends fourth information to the terminal device, and the terminal device obtains the fourth information, where the fourth information indicates that the CG resource is located in an unlicensed frequency band or a licensed frequency band.

If the terminal device obtains the first information but does not obtain the fourth information, the terminal device may determine that the CG resource is located in the licensed frequency band. If the terminal device obtains the first information and obtains the fourth information, the terminal device may determine that the CG resource is located in the unlicensed frequency band. In other words, the fourth information exists only in the unlicensed frequency band and is not configured in the licensed frequency band. Therefore, the fourth information may indicate whether a resource is located in the licensed frequency band or the unlicensed frequency band. The terminal device may report the used or unused resource, namely, the second information, to the network device in the licensed frequency band or the unlicensed frequency band.

The network device sends the fourth information and the first information to the terminal device in a plurality of implementations.

In an implementation, the fourth information may be "cg-RetransmissionTimer". Information configured by the network device for the terminal device includes "cg-RetransmissionTimer" and the first information. The terminal device obtains the configuration information, and may determine that the configured CG resource is located in the unlicensed frequency band.

In another implementation, the fourth information may be transmitted by using RRC signaling, and the network device may configure the fourth information and the first information for the terminal device by using the RRC signaling. The terminal device obtains the RRC signaling, and may determine that the configured CG resource is located in the unlicensed frequency band.

In still another possible implementation, the fourth information may be "cg-RetransmissionTimer", and the fourth information may be configured by using RRC signaling. The RRC signaling sent by the network device to the terminal device includes "cg-RetransmissionTimer" and the first information. The terminal device obtains the RRC signaling, and may determine that the configured CG resource is located in the unlicensed frequency band.

According to the resource indication method provided in embodiments of this application, the CG resource is located in the licensed frequency band or the unlicensed frequency band, and the terminal device reports the occupied or unoccupied resource in the CG resource to the network device based on the first information. This helps distinguish whether the terminal device is capable of indicating the occupied or unoccupied resource, to ensure the service reliability.

Optionally, the second information further indicates at least one of the following: a HARQ process number, a redundancy version, new data transmission or data retransmission, or a channel occupancy time.

In the unlicensed frequency band, to be specific, the fourth information indicates that the CG resource is located in the unlicensed frequency band, the terminal device sends the second information to the network device. In addition to indicating the used or unused resource in the CG resource, the second information may further indicate at least one of the HARQ process number, the redundancy version, new data transmission or data retransmission, or the channel occupancy time.

If the second information is transmitted by using the UCI, in addition to indicating the used or unused resource in the CG resource, the UCI may further indicate at least one of the HARQ process number, the redundancy version, new data transmission or data retransmission, or the channel occupancy time. The UCI is different from UCI in an existing protocol, and is newly added UCI. Compared with the UCI in the existing protocol, the newly added UCI has a newly added field, and the newly added field indicates the used or unused resource in the CG resource.

For example, the UCI indicates the unused resource in the CG resource, the HARQ process number, the redundancy version, new data transmission or data retransmission, and the channel occupancy time. A bit sequence included in the UCI or a field included in the UCI may be shown in Table 6.

Table 6

| Field | Bit width |
|---|---|
| HARQ process number | 5 or 4 |
| Redundancy version | 2 |
| New data indicator | 1 |
| Channel occupancy time | $[\log_2 C]$, 1, or 0 |

(continued)

| Field | Bit width |
|---|---|
| Unused resource | n |

As shown in Table 6, the fields included in the UCI are: the HARQ process number, the redundancy version, the new data indicator, and the unused resource. The HARQ process number occupies 5 or 4 bits. The redundancy version occupies 2 bits. The new data indicator occupies 1 bit, and indicates new data transmission or data retransmission. The channel occupancy time occupies $[\log_2 C]$, 1, or 0 bits, where C is a configured constant. The unused resource occupies n bits, and n may be a positive integer. A specific value of n is not limited in embodiments of this application. If the field of the UCI includes the HARQ process number, it indicates that the HARQ process number is determined by the terminal device and is reported by using UCI.

In this implementation, the second information further indicates at least one of the HARQ process number, the redundancy version, or new data transmission or data retransmission, where one piece of information may indicate a plurality of pieces of information, to help reduce instructions for sending information.

Optionally, the method 700 may further include: multiplexing, into the second information based on the first information, at least one piece of the following information: HARQ process number information, redundancy version information, new data transmission or data retransmission information, or channel occupancy time information.

In the licensed frequency band, to be specific, the fourth information indicates that the CG resource is located in the licensed frequency band, and "multiplexing" means replacement in this embodiment of in this application. To be specific, the terminal device may replace at least one piece of the following information: the HARQ process number information, the redundancy version information, or the new data transmission or data retransmission information with the second information based on the first information. The second information may be transmitted by using the UCI. The terminal device may replace at least one piece of the following information: the HARQ process number information, the redundancy version information, the new data transmission or data retransmission information, or the channel occupancy time information, that is included in the UCI with the second information based on the first information. In addition, in the method in this application, the terminal device uses the CG-UCI for the licensed frequency band based on the first information, and uses one or more original fields of the CG-UCI to indicate the used or unused resource.

For example, the UCI includes the HARQ process number information, the redundancy version information, the new data transmission or data retransmission information, and the channel occupancy time information. The terminal device may replace, based on the first information, the redundancy version information and the new data transmission or data retransmission information that are included in the UCI with the second information. In this case, fields included in the UCI after replacement may be shown in Table 7.

Table 7

| Field | Bit width |
|---|---|
| HARQ process number | 5 or 4 |
| Unused resource | n |
| Channel occupancy time | $[\log_2 C]$, 1, or 0 |

As shown in Table 7, the fields included in the UCI are: the HARQ process number, the unused resource, and the channel occupancy time. The HARQ process number occupies 5 or 4 bits. The unused resource occupies n bits, and n may be a positive integer. A specific value of n is not limited in embodiments of this application. The channel occupancy time occupies $[\log_2 C]$, 1, or 0 bits, where C is a configured constant. If the field of the UCI includes the HARQ process number, it indicates that reporting the HARQ process number by using UCI is determined by the terminal device.

For example, the UCI includes the HARQ process number information, the redundancy version information, the new data transmission or data retransmission information, and the channel occupancy time information. The terminal device may replace, based on the first information, the channel occupancy time information included in the UCI with the second information.

This implementation allows for indicating the reporting of the used or unused resource without the need for additional bits, thereby facilitating bit conservation.

Sequence numbers of the foregoing processes do not mean execution sequences. The execution sequences of the processes should be determined based on functions and internal logic of the processes, and should not constitute any limitation on implementation processes of embodiments of this application.

The foregoing describes in detail the methods in embodiments of this application with reference to FIG. 1 to FIG.

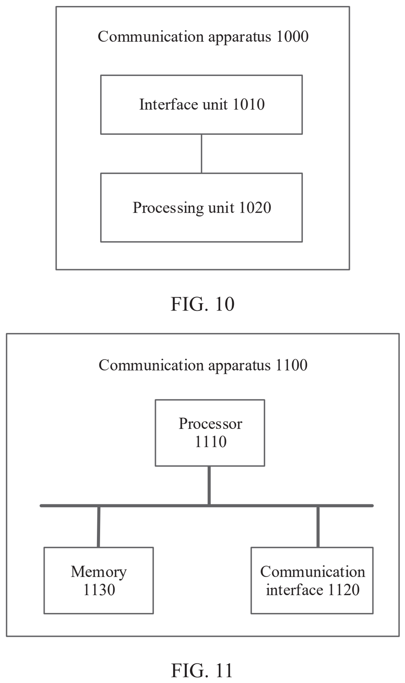

9. The following describes in detail apparatuses in embodiments of this application with reference to FIG. 10 and FIG. 11.

FIG. 10 is a schematic block diagram of a communication apparatus 1000 according to an embodiment of this application. As shown in FIG. 10, the communication apparatus 1000 may include an interface unit 1010 and a processing unit 1020.

In a possible implementation, the communication apparatus 1000 may perform the steps performed by the terminal device in the method 700.

The interface unit 1010 is configured to obtain first information, where the first information indicates to report a used or an unused resource in a configured grant CG resource in a CG period; and the processing unit 1020 is configured to control the apparatus to send second information based on the first information, where the second information indicates the used or unused resource in the CG resource.

In another possible implementation, the communication apparatus 1000 may perform the steps performed by the network device in the method 700.

The interface unit 1010 is configured to: send first information, where the first information indicates to report a used or an unused resource in a configured grant CG resource in a CG period; and obtain second information, where the second information indicates the used or unused resource in the CG resource.

It should be understood that the communication apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the communication apparatus 1000 may be specifically the terminal device or the network device in the foregoing embodiments; and the communication apparatus 1000 may be configured to perform procedures and/or steps corresponding to the terminal device or the network device in the foregoing method embodiments. To avoid repetition, details are not described herein again.

The communication apparatus 1000 in each of the foregoing solutions has functions for implementing corresponding steps performed by the terminal device or the network device in the foregoing methods. The functions may be implemented by hardware, or may be implemented by hardware by executing corresponding software. The hardware or the software includes one or more modules corresponding to the functions.

In this embodiment of this application, the communication apparatus 1000 in FIG. 10 may alternatively be a chip or a chip system, for example, a system on chip (system on chip, SoC).

FIG. 11 is a schematic block diagram of another communication apparatus 1100 according to an embodiment of this application. As shown in FIG. 11, the communication apparatus 1100 includes a processor 1110, a communication interface 1120, and a memory 1130. The processor 1110, the communication interface 1120, and the memory 1130 communicate with each other through an internal connection path. The memory 1130 is configured to store instructions. The communication interface 1020 has an input/output function or a transceiver function, and is configured to communicate with other devices through a transmission medium, so that the communication apparatus 1000 can communicate with the other devices. The processor 1110 is configured to execute the instructions stored in the memory 1130, to control the communication interface 1120 to send a signal and/or receive a signal.

It should be understood that the communication apparatus 1100 may be specifically the terminal device or the network device in the foregoing embodiments, and may be configured to perform steps and/or procedures corresponding to the terminal device or the network device in the foregoing method embodiments. Optionally, the memory 1130 may include a read-only memory and a random access memory, and provide the instructions and data for the processor. A part of the memory may further include a nonvolatile random access memory. For example, the memory may further store information of a device type. The processor 1110 may be configured to execute the instructions stored in the memory, and when the processor 1110 executes the instructions stored in the memory, the processor 1110 is configured to perform the steps and/or procedures in the method embodiments corresponding to the terminal device or the network device. The communication interface 1120 may include a transmitter and a receiver. The transmitter may be configured to implement steps and/or procedures that correspond to the communication interface 1120 and that are used to perform a sending action. The receiver may be configured to implement steps and/or procedures that correspond to the communication interface 1120 and that are used to perform a receiving action.

It should be understood that, in embodiments of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor, or the like.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by a combination of hardware and software units in the processor. A software unit may be located in a mature storage medium in the art, such as a random access memory, a flash memory, a read-only memory, a programmable read-only memory, an electrically erasable programmable memory, a register, or the like. The storage medium is located in the memory, and the processor reads the instructions in the memory and completes the steps in the foregoing methods in combination with hardware of the processor. To avoid repetition, details are not described herein again.

An embodiment of this application further provides a communication system. The communication system may include the terminal device and the network device in the foregoing embodiments.

An embodiment of this application provides a computer-readable storage medium. The computer-readable storage medium is configured to store a computer program. The computer program is used to implement the method corresponding to the terminal device shown in various possible implementations in the foregoing embodiments.

An embodiment of this application provides another computer-readable storage medium. The computer-readable storage medium is configured to store a computer program. The computer program is used to implement the method corresponding to the network device shown in various possible implementations in the foregoing embodiments.

An embodiment of this application provides a computer program product. The computer program product includes a computer program (which may also be referred to as code or instructions). When the computer program is run on a computer, the computer may perform the method corresponding to the terminal device shown in the foregoing embodiments.

An embodiment of this application provides another computer program product. The computer program product includes a computer program (which may also be referred to as code or instructions). When the computer program is run on a computer, the computer may perform the method corresponding to the network device shown in the possible implementations in the foregoing embodiments.

An embodiment of this application provides a chip system. The chip system is configured to support the foregoing terminal device in implementing the functions shown in embodiments of this application.

An embodiment of this application provides another chip system. The chip system is configured to support the foregoing network device in implementing the functions shown in embodiments of this application.

A person of ordinary skill in the art may be aware that units and algorithm steps in the examples described based on embodiments disclosed in this specification can be implemented by electronic hardware or a combination of computer software and electronic hardware. Whether the functions are performed in a hardware or software manner depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a receiver, or the like) to perform all or some of the steps of the methods described in embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A resource indication method, comprising:

   obtaining first information, wherein the first information indicates to report a used or an unused resource in a configured grant CG resource in a CG period; and
   sending second information based on the first information, wherein the second information indicates the used or unused resource in the CG resource.

2. The method according to claim 1, wherein the method is applied to a terminal device, and the method further comprises:
   sending third information, wherein the third information indicates that the terminal device is capable of reporting the used or unused resource in the CG resource.

3. The method according to claim 1 or 2, wherein the CG resource is located in a licensed frequency band.

4. The method according to claim 3, wherein the second information further indicates at least one of the following:
   a hybrid automatic repeat request HARQ process number, a redundancy version, or new data transmission or data retransmission.

5. The method according to claim 3, wherein the method further comprises:
   multiplexing, into the second information based on the first information, at least one piece of the following information:
   HARQ process number information, redundancy version information, or new data transmission or data retransmission information.

6. The method according to claim 1 or 2, wherein the method further comprises:
   obtaining fourth information, wherein the fourth information and the first information indicate that the CG resource is located in an unlicensed frequency band or a licensed frequency band.

7. The method according to claim 6, wherein the second information further indicates at least one of the following:
   a HARQ process number, a redundancy version, new data transmission or data retransmission, or a channel occupancy time.

8. The method according to claim 6, wherein the method further comprises:
   multiplexing, into the second information based on the first information, at least one piece of the following information:
   HARQ process number information, redundancy version information, new data transmission or data retransmission information, or channel occupancy time information.

9. A resource indication method, comprising:

   sending first information, wherein the first information indicates to report a used or an unused resource in a configured grant CG resource in a CG period; and
   obtaining second information, wherein the second information indicates the used or unused resource in the CG resource.

10. The method according to claim 9, wherein the method further comprises:
    obtaining third information, wherein the third information indicates that a terminal device is capable of reporting the used or unused resource in the CG resource.

11. The method according to claim 9 or 10, wherein the CG resource is located in a licensed frequency band.

12. The method according to claim 11, wherein the second information further indicates at least one of the following:

a hybrid automatic repeat request HARQ process number, a redundancy version, or new data transmission or data retransmission.

13. The method according to claim 9 or 10, wherein the method further comprises:
    sending fourth information, wherein the fourth information and the first information indicate that the CG resource is located in an unlicensed frequency band or a licensed frequency band.

14. The method according to claim 13, wherein the second information further indicates at least one of the following:
    a HARQ process number, a redundancy version, new data transmission or data retransmission, or a channel occupancy time.

15. A communication apparatus, comprising:

    an interface unit, configured to obtain first information, wherein the first information indicates to report a used or an unused resource in a configured grant CG resource in a CG period; and
    a processing unit, configured to control the apparatus to send second information based on the first information, wherein the second information indicates the used or unused resource in the CG resource.

16. The apparatus according to claim 15, wherein the interface unit is further configured to:
    send third information, wherein the third information indicates that the apparatus is capable of reporting the used or unused resource in the CG resource.

17. The apparatus according to claim 15 or 16, wherein the CG resource is located in a licensed frequency band.

18. The apparatus according to claim 17, wherein the second information further indicates at least one of the following:
    a hybrid automatic repeat request HARQ process number, a redundancy version, or new data transmission or data retransmission.

19. The apparatus according to claim 17, wherein the processing unit is further configured to:
    multiplex, into the second information based on the first information, at least one piece of the following information: HARQ process number information, redundancy version information, or new data transmission or data retransmission information.

20. The apparatus according to claim 15 or 16, wherein the interface unit is further configured to:
    obtain fourth information, wherein the fourth information and the first information indicate that the CG resource is located in an unlicensed frequency band or a licensed frequency band.

21. The apparatus according to claim 20, wherein the second information further indicates at least one of the following:
    a HARQ process number, a redundancy version, new data transmission or data retransmission, or a channel occupancy time.

22. The apparatus according to claim 20, wherein the processing unit is configured to:
    multiplex, into the second information based on the first information, at least one piece of the following information: HARQ process number information, redundancy version information, new data transmission or data retransmission information, or channel occupancy time information.

23. A communication apparatus, comprising:
    an interface unit, configured to: send first information, wherein the first information indicates to report a used or an unused resource in a configured grant CG resource in a CG period; and obtain second information, wherein the second information indicates the used or unused resource in the CG resource.

24. The apparatus according to claim 23, wherein the interface unit is further configured to:
    obtain third information, wherein the third information indicates that a terminal device is capable of reporting the used or unused resource in the CG resource.

25. The apparatus according to claim 23 or 24, wherein the CG resource is located in a licensed frequency band.

26. The apparatus according to claim 25, wherein the second information further indicates at least one of the following:

a hybrid automatic repeat request HARQ process number, a redundancy version, or new data transmission or data retransmission.

27. The apparatus according to claim 23 or 24, wherein the interface unit is further configured to:
send fourth information, wherein the fourth information and the first information indicate that the CG resource is located in an unlicensed frequency band or a licensed frequency band.

28. The apparatus according to claim 27, wherein the second information further indicates at least one of the following: a HARQ process number, a redundancy version, new data transmission or data retransmission, or a channel occupancy time.

29. A computer-readable storage medium, wherein the computer-readable storage medium stores a computer program, and when the computer program is run on a computer, the method according to any one of claims 1 to 8 is performed or the method according to any one of claims 9 to 14 is performed.

30. A computer program product, wherein the computer program product comprises instructions, and when the instructions are executed, the method according to any one of claims 1 to 8 is performed or the method according to any one of claims 9 to 14 is performed.

31. A communication apparatus, comprising a unit configured to perform the method according to any one of claims 1 to 8.

32. A communication apparatus, comprising a unit configured to perform the method according to any one of claims 9 to 14.

33. A communication apparatus, comprising a processor, wherein the processor is coupled to a memory, the memory is configured to store instructions, and when the processor invokes the instructions, the communication apparatus is caused to perform the method according to any one of claims 1 to 8.

34. A communication apparatus, comprising a processor, wherein the processor is coupled to a memory, the memory is configured to store instructions, and when the processor invokes the instructions, the communication apparatus is caused to perform the method according to any one of claims 9 to 14.

35. A communication system, comprising the communication apparatus according to any one of claims 15 to 22 and the communication apparatus according to any one of claims 23 to 28.

FIG. 1

FIG. 2

FIG. 3

Frame arrival | First frame | Second frame | Third frame | Fourth frame | Fifth frame

16.67 ms | 16.67 ms | 16.67 ms | 16.67 ms

t

FIG. 4

RRC

PUSCH | PUSCH | PUSCH

t

FIG. 5

RRC

PUSCH | PUSCH | PUSCH

t

FIG. 6

700

Terminal device

Network device

S701: First information, where the first information indicates to report a used or an unused resource in a CG resource in a CG period

S702: Second information, where the second information indicates the used or unused resource in the CG resource

FIG. 7

800

Terminal device — Network device

S801: RRC signaling, where the RRC signaling is used to configure a plurality of PUSCH resources in a CG period and first information, and the first information indicates to report an unused resource in the plurality of PUSCH resources in the CG period duration

S802: Uplink data

S803: UCI, where the UCI includes second information, and the second information indicates the unused resource in the plurality of PUSCH resources in the CG period

FIG. 8

900

Terminal device — Network device

S901: RRC signaling and DCI, where the RRC signaling and the DCI are used to configure a plurality of PUSCH resources in a CG period and first information, and the first information indicates to report an unused resource in the plurality of PUSCH resources in the CG period duration

S902: Uplink data

S903: UCI, where the UCI includes second information, and the second information indicates the unused resource in the plurality of PUSCH resources in the CG period

FIG. 9

Communication apparatus 1000

Interface unit 1010

Processing unit 1020

FIG. 10

Communication apparatus 1100

Processor
1110

Memory
1130

Communication
interface 1120

FIG. 11

## INTERNATIONAL SEARCH REPORT

| International application No. |
|---|
| **PCT/CN2024/082355** |

**A. CLASSIFICATION OF SUBJECT MATTER**

H04W72/231(2023.01)i; H04W72/21(2023.01)i

According to International Patent Classification (IPC) or to both national classification and IPC

**B. FIELDS SEARCHED**

Minimum documentation searched (classification system followed by classification symbols)

IPC:H04W, H04L

Documentation searched other than minimum documentation to the extent that such documents are included in the fields searched

Electronic data base consulted during the international search (name of data base and, where practicable, search terms used)

CNTXT, CNKI, ENTXTC, VEN, ENTXT, 3GPP: 配置授权, 资源, 使用, 占用, 状态, 上报, 报告, 反馈, 指示, 终端, CG, configured grant, resource, use, occupy, status, report, feedback, indicate, UE

**C. DOCUMENTS CONSIDERED TO BE RELEVANT**

| Category* | Citation of document, with indication, where appropriate, of the relevant passages | Relevant to claim No. |
|---|---|---|
| PX | CN 116615951 A (BEIJING XIAOMI MOBILE SOFTWARE CO., LTD.) 18 August 2023 (2023-08-18)<br>description, paragraphs [0064]-[0098], and figures 2-23 | 1-35 |
| X | WO 2020239197 A1 (FRAUNHOFER GES FORSCHUNG) 03 December 2020 (2020-12-03)<br>description, page 23, line 24 to page 26, line 10, and page 37, line 4 to page 38, line 22, and figure 10 | 1-35 |
| A | CN 111342942 A (BEIJING SPREADTRUM HIGH TECHNOLOGY COMMUNICATIONS TECHNOLOGY CO., LTD.) 26 June 2020 (2020-06-26)<br>entire document | 1-35 |
| A | WO 2022029462 A1 (OROPE FRANCE SARL) 10 February 2022 (2022-02-10)<br>entire document | 1-35 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 May 2024** | **03 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| International application No. |
| --- |
| **PCT/CN2024/082355** |

| Patent document cited in search report | | | Publication date (day/month/year) | Patent family member(s) | | | Publication date (day/month/year) |
| --- | --- | --- | --- | --- | --- | --- | --- |
| CN | 116615951 | A | 18 August 2023 | None | | | |
| WO | 2020239197 | A1 | 03 December 2020 | WO | 2020239246 | A1 | 03 December 2020 |
| CN | 111342942 | A | 26 June 2020 | US | 2022046681 | A1 | 10 February 2022 |
| | | | | WO | 2020125708 | A1 | 25 June 2020 |
| | | | | EP | 3902307 | A1 | 27 October 2021 |
| | | | | EP | 3902307 | A4 | 17 August 2022 |
| WO | 2022029462 | A1 | 10 February 2022 | EP | 4190104 | A1 | 07 June 2023 |
| | | | | US | 2023125590 | A1 | 27 April 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310363641